# EUROPEAN PATENT SPECIFICATION

(11) **EP 4 350 858 B1**
(45) Date of publication and mention of the grant of the patent: **09.07.2025**
(21) Application number: 22200291.7
(22) Date of filing: 07.10.2022
(51) Int. Cl.: H01M 50/224, H01M 50/244, H01M 50/249, H01M 50/258, H01M 50/264, H01M 50/276, H01M 50/291

(54) **BATTERY PACK, BATTERY PACK SYSTEM AND ELECTRIFIED HEAVY-DUTY VEHICLE**
BATTERIEPACK, BATTERIEPACKSYSTEM UND ELEKTRIFIZIERTES SCHWERLASTFAHRZEUG
BLOC-BATTERIE, SYSTÈME DE BLOC-BATTERIE ET VÉHICULE ÉLECTRIFIÉ À GRANDE PUISSANCE

(43) Date of publication of application: 10.04.2024
(73) Proprietor: VOLVO TRUCK CORPORATION, 405 08 Göteborg (SE)
(72) Inventor: LUNDIN, Robert, 417 29 GÖTEBORG (SE)
(74) Representative: Kransell & Wennborg KB

(56) References cited:
- EP-A1- 3 989 344
- GB-A- 322 852
- US-A1- 2013 273 398
- US-A1- 2020 152 929

## Description

### TECHNICAL FIELD

The disclosure relates generally to battery packs. In particular aspects, the disclosure relates to a battery pack, a battery pack system and an electrified heavy-duty vehicle. The disclosure can be applied in heavy-duty vehicles, such as trucks, buses, and construction equipment. Although the disclosure may be described with respect to a particular vehicle, the disclosure is not restricted to any particular vehicle.

### BACKGROUND

An electrified heavy-duty vehicle may comprise a plurality of battery packs. Each battery pack may comprise a plurality of battery modules. Each battery module may in turn comprise a plurality of battery cells. The battery packs may be used to provide the electrified heavy-duty vehicle with electric energy, such as for propulsion. A plurality of battery packs may be grouped to form a battery pack system.

### SUMMARY

According to a first aspect of the disclosure, there is provided a battery pack comprising a housing including a side wall, the side wall comprising a plurality of through holes; a plurality of battery modules accommodated inside the housing; a plurality of fastener devices securing the battery modules to the side wall, each fastener device passing through a respective through hole and sealingly closing the through hole; and a cover plate sealingly joined to the side wall; wherein the fastener devices are positioned outside the cover plate.

The first aspect of the disclosure may seek to provide an improved sealing solution for a battery pack. A technical benefit may include that the fastener devices and the cover plate sealingly close the side wall, e.g., against water ingress, using a relatively short seal length. In this way, a simplified sealing solution may be provided.

Each fastener device may have a longitudinal axis. In this case, the fastener devices may be positioned outside the cover plate by being offset from the cover plate in a direction transverse to the longitudinal axis.

In some examples, the cover plate has a main extension plane. In this case, the fastener devices may be positioned outside the cover plate by being offset from the cover plate in a direction parallel with the cover plate.

In some examples, cover plate is positioned between two fastener devices among the plurality of fastener devices.

The side wall may comprise a plurality of through holes associated with each battery module. Thus, a first plurality of through holes may be associated with a first battery module and a second plurality of through holes may be associated with a second battery module.

In some example, the side wall comprises at least one side wall opening in addition to the plurality of through holes. The cover plate may sealingly close each side wall opening. Thus, the side wall may not be watertight until the cover plate and the fastener devices are provided.

The housing may comprise two side walls, each comprising the plurality of through holes. In this case, the battery modules may be arranged between the side walls. A cover plate may be sealingly joined to each side wall.

The housing may comprise a top wall and a bottom. The battery modules may be arranged between the top wall and the bottom. Each of the top wall and the bottom may be sealingly closed.

The housing may comprise a front plate and a rear wall. The battery modules may be arranged between the front plate and the rear wall. The rear wall may be sealingly closed. The front plate may be detachably attached to a remainder of the housing. (i.e., the housing except the front plate). The front plate may sealingly close the housing when attached thereto.

In some examples, the cover plate is joined to the side wall by welding, brazing or soldering. In any case, the joining process may be applied along an entire periphery of the cover plate.

In some examples, each battery module has a module side parallel with the side wall. In this case, a cover plate area of the cover plate may be larger than a module side area of the module side. The cover plate may thus be larger than the module side.

In some examples, the cover plate is parallel with the side wall. Also each module side may be parallel with the side wall.

In some examples, the housing comprises a housing opening through which the battery modules can be inserted into the housing in an insertion direction. In this case, the side wall may be parallel with the insertion direction.

In some examples, each fastener device comprises a bolt and a seal washer enclosing the bolt. By tightening the bolts, the seal washers may be compressed to sealingly close the respective through holes.

In some examples, the side wall comprises a metal sheet spanning across the battery modules. The metal sheet may thus be larger than an area formed by the battery modules. The metal sheet may for example be larger than a sum of all module side areas of the battery modules.

In some examples, the metal sheet comprises a plurality of wings where each wing is arranged to slidingly support a respective battery module. Each wing may extend in parallel with the insertion direction.

In some examples, the side wall comprises a frame enclosing the cover plate. The at least one side wall opening, which may be covered by the cover plate, may be arranged inside the frame.

In some examples, the through holes are provided in the frame.

In some examples, the frame forms a tube that is closed except for the through holes.

In some examples, each fastener device comprises a head. In this case, each head may be positioned inside the tube when the fastener devices sealingly close the through holes.

According to a second aspect of the disclosure, there is provided a battery pack system comprising a plurality of battery packs according to the first aspect.

According to a third aspect of the disclosure, there is provided an electrified heavy-duty vehicle comprising a battery pack according to the first aspect or a battery pack system according to the second aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
FIG. 1 schematically represents a perspective side view of an electrified heavy-duty vehicle according to one example.
FIG. 2 schematically represents a perspective side view of a battery pack according to one example.
FIG. 3 schematically represents a perspective side view of a battery pack when a side plate has been removed according to one example.
FIG. 4 schematically represents a perspective side view of a housing for a battery pack according to one example.
FIG. 5 schematically represents a side view of a battery pack according to one example.
FIG. 6 schematically represents a side view of a battery pack according to one example.
FIG. 7 schematically represents a perspective view of a metal sheet according to one example.
FIG. 8 schematically represents a cross-sectional partial view of a battery pack according to one example.
FIG. 9 schematically represents a cross-sectional perspective and partial view of the battery pack in FIG. 8.
FIG. 10 schematically represents a perspective side view of a battery pack according to one example.

### DETAILED DESCRIPTION

Aspects set forth below represent the necessary information to enable those skilled in the art to practice the disclosure.

A battery pack may comprise a plurality of battery modules arranged inside a housing. Each battery module may in turn comprise a plurality of battery cells. A plurality of battery packs may be used to provide an electrified heavy-duty vehicle with electric energy, such as for propulsion. In such implementation, there is a risk that the battery packs are exposed to water, such as rain or water splashing from the road. In order to sealingly close the battery pack, a cover plate may be sealingly provided on a side wall of the housing. The cover plate may be secured to the housing by a plurality of bolts. The cover plate may in turn cover a plurality of bolts used to secure the battery modules to the housing. A relatively long seal may be provided along a periphery of the cover plate. Such solution typically involves using a large number of bolts and a long sealing distance. As a consequence, such solution is prone to fluid leakage through the side wall. Moreover, in order to remove a battery module, the cover plate has to be removed to access the bolts securing the battery module to the housing. Thus, replacement of battery modules is complicated.

By providing a cover plate sealingly joined to the side wall, and by providing a plurality of fastener devices outside the cover plate securing the battery modules to the side wall and sealingly closing an associated through hole, the use of a relatively long seal mentioned above may be avoided. Moreover, the battery modules may be removed, e.g., for exchange, without having to remove the cover plate. Due to the joining process between the cover plate and the side wall, the cover plate may be sealingly connected to the side wall. In this way, no dedicated seal may be needed between the cover plate and the side wall. In case the fastener devices comprise seals for sealingly closing the through holes, a total seal length of these seals may be substantially shorter than, e.g., less than half of, a total seal length of a seal between the cover plate and the side wall in a battery module as described above. Since a sealing distance may be reduced, the sealing solution may be less prone to defects and consequential leakage. Moreover, the battery pack may be provided with a simplified sealing solution.

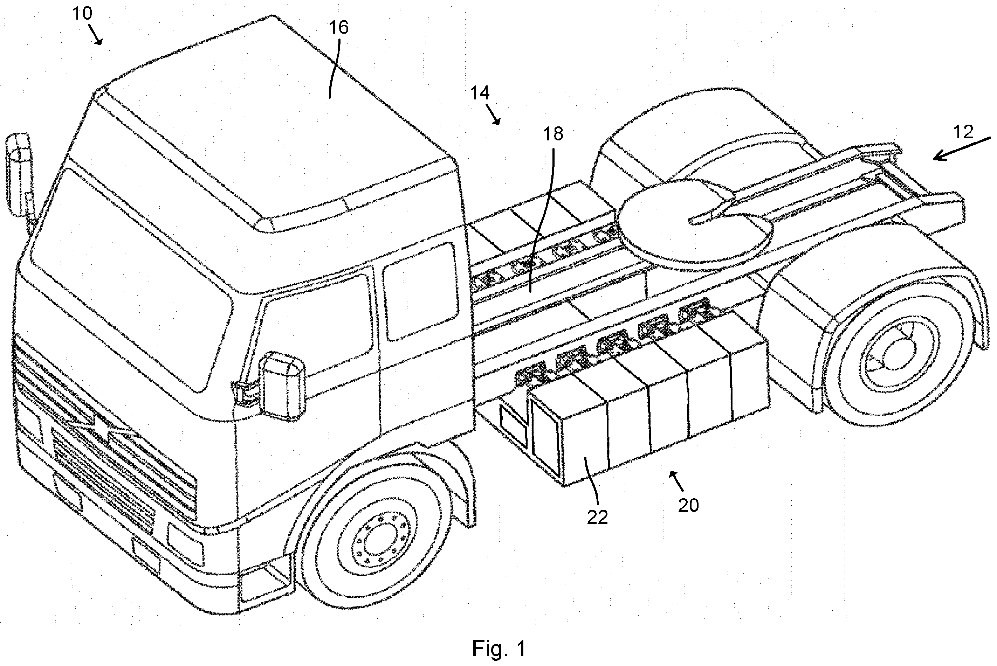

FIG. 1 schematically represents a perspective side view of an electrified heavy-duty vehicle according to one example, here exemplified as a truck 10. FIG. 1 shows a forward travel direction 12 of the truck 10. The truck 10 comprises a chassis arrangement 14 and a vehicle body 16 supported by the chassis arrangement 14. The chassis arrangement 14 of this example comprises a chassis frame 18 and two battery pack systems 20. Each battery pack system 20 is secured to the chassis frame 18, here on opposite sides of the chassis frame 18. In FIG. 1, each battery pack system 20 is a battery pack bundle. Each battery pack system 20 comprises a plurality of battery packs 22.

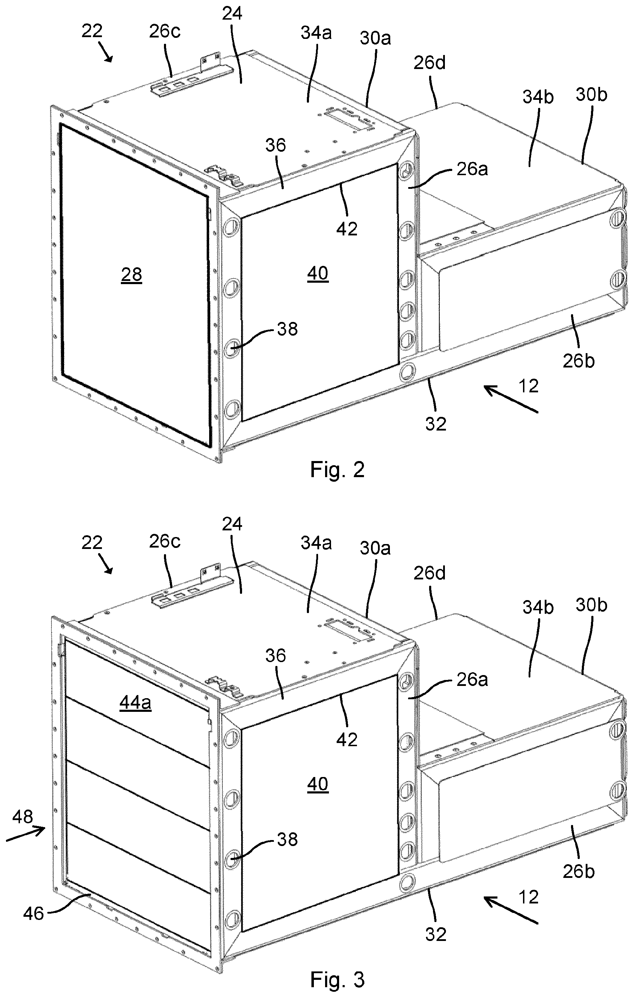

FIG. 2 schematically represents a perspective side view of one of the battery packs 22 according to one example. Although description may be given for only one battery pack 22, the description may apply equally to all battery packs 22 of the truck 10.

The battery pack 22 comprises a housing 24. As shown in FIG. 2, the housing 24 of this nonlimiting example is L-shaped. The housing 24 may be made of metal.

The housing 24 of this specific example comprises a planar and rectangular first right side wall 26a and a planar and rectangular second right side wall 26b. The first right side wall 26a and the second right side wall 26b are here parallel and lie in a common plane. The housing 24 of this specific example further comprises a planar and rectangular first left side wall 26c and a planar and rectangular second left side wall 26d. The first left side wall 26c and the second left side wall 26d are here parallel with the first right side wall 26a and the second right side wall 26b and lie in a common plane. One, several or all of the first right side wall 26a, second right side wall 26b, first left side wall 26c and second left side wall 26d may also be referred to with reference numeral "26". Although description may be given mainly for the first right side wall 26a, the description may apply equally to any side wall 26 of the battery pack 22.

The housing 24 of this example further comprises a front plate 28. By removing or opening the front plate 28, an interior of the housing 24 may be accessed. In this example, the front plate 28 is detachably connected to the remainder of the housing 24 (including the side walls 26), e.g., by one or more fasteners (not shown). The front plate 28 may be configured to sealingly close the interior of the housing 24 when attached. The front plate 28 of this example is planar and rectangular, and oriented transverse to the side walls 26.

The housing 24 of this example further comprises two rear walls, here a first rear wall 30a and a second rear wall 30b. Each rear wall 30a, 30b is here planar and rectangular, and oriented parallel with the front plate 28. The first rear wall 30a is here positioned between the front plate 28 and the second rear wall 30b. Each rear wall 30a, 30b here sealingly closes to the interior of the housing 24. Each rear wall 30a, 30b is here positioned between the side walls 26. One or both rear walls 30a, 30b may also be referred to with reference numeral "30".

The housing 24 of this example further comprises a bottom 32. The bottom 32 is here planar and rectangular, and oriented transverse to the side walls 26. The bottom 32 here sealingly closes to the interior of the housing 24. The bottom 32 is here positioned between the side walls 26.

The housing 24 of this example further comprises two top walls, here a front top wall 34a and a rear top wall 34b. Each top wall 34a, 34b is here planar and rectangular, and oriented parallel with the bottom 32. The rear top wall 34b is here positioned between the front top wall 34a and the bottom 32. Each top wall 34a, 34b here sealingly closes to the interior of the housing 24. Each top wall 34a, 34b is here positioned between the side walls 26. One or both top walls 34a, 34b may also be referred to with reference numeral "34".

The first right side wall 26a of this example comprises a frame 36. As shown in FIG. 2, the frame 36 is here provided along the periphery of the first right side wall 26a.

The first right side wall 26a comprises a plurality of through holes 38. In this example, the through holes 38 pass through the frame 36 and into the interior of the housing 24.

The battery pack 22 further comprises a cover plate 40. The cover plate 40 of this example is planar and rectangular. The cover plate 40 is sealingly joined to the first right side wall 26a. In this example, the cover plate 40 has been welded to the first right side wall 26a with a continuous weld 42. The weld 42 encloses the cover plate 40 and seals any gap between the cover plate 40 and the first right side wall 26a. In this example, the frame 36 encloses the cover plate 40 and the weld 42 is provided between the frame 36 and the cover plate 40. Moreover, the frame 36 and the cover plate 40 are flush towards an exterior environment with respect to the battery pack 22. By welding the cover plate 40 to the frame 36, the structural rigidity of the first right side wall 26a, and consequently also of the entire housing 24, may be increased. In one example, the cover plate 40 is made of metal.

The frame 36 is here formed as a continuous tube enclosing the cover plate 40. In this example, the tube is closed except for the through holes 38.

FIG. 3 schematically represents a perspective side view of the battery pack 22 according to one example. In FIG. 3, the front plate 28 has been removed to increase visibility. The battery pack 22 comprises a plurality of battery modules accommodated inside the housing 24, among which FIG. 3 shows a plurality of (here four) first battery modules 44a arranged in a first stack. The first battery modules 44a are in this example positioned between the first right side wall 26a and the first left side wall 26c, between the front top wall 34a and the bottom 32, and between the front plate 28 and the first rear wall 30a. One, several of all of the first battery modules 44a may also be referred to with reference numeral "44".

FIG. 3 further shows that the housing 24 comprises a housing opening 46. The first battery modules 44a may be inserted through the housing opening 46 into the housing 24 in an insertion direction 48. In this example, the housing opening 46 is formed by the front top wall 34a, the first right side wall 26a, the bottom 32 and the first left side wall 26c. Moreover, in this example, the front top wall 34a, the first right side wall 26a, the bottom 32 and the first left side wall 26c are oriented in parallel with the insertion direction 48, and the front plate 28 (when attached), the first rear wall 30a and the second rear wall 30b are oriented transverse to the insertion direction 48.

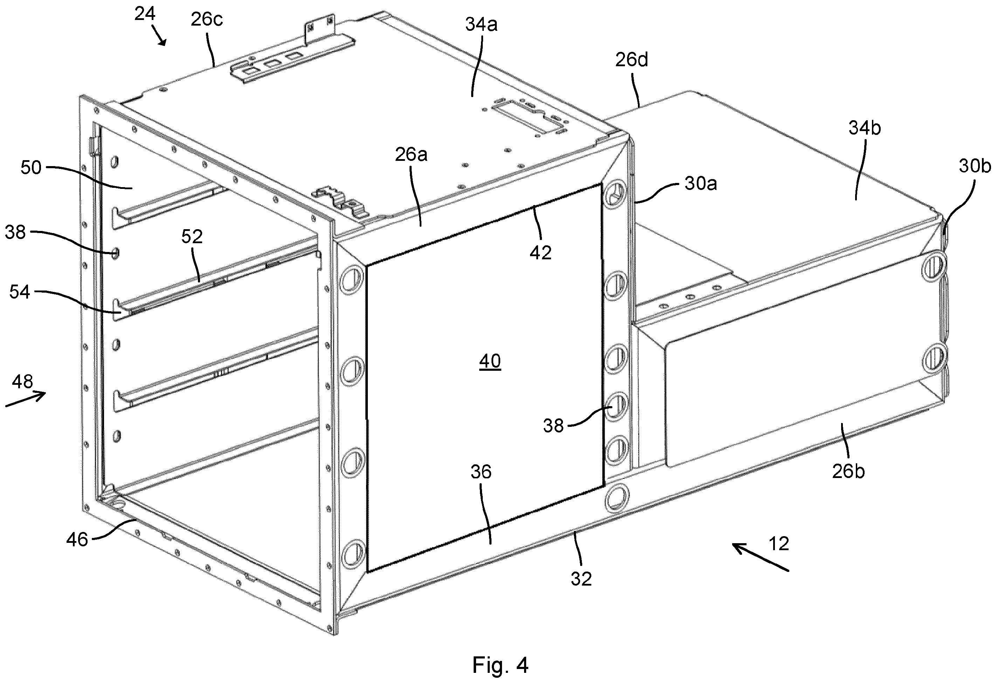

FIG. 4 schematically represents a perspective side view of the housing 24 according to one example. In FIG. 4, the first battery modules 44a have been removed to further increase visibility. As shown, each side wall 26 of this example further comprises a metal sheet 50. Each side wall 26 may thus comprise the metal sheet 50 and the frame 36 secured to the metal sheet 50. The metal sheet 50 is one example of support body for supporting the battery modules 44.

The metal sheet 50 comprises a plurality of wings 52, here one wing 52 associated with each battery module 44. Each wing 52 extends in parallel with the insertion direction 48 and is arranged to slidingly support a respective battery module 44. The wings 52 are here formed by cutting and folding portions of the metal sheet 50. As a consequence, each side wall 26 comprises a plurality of side wall openings 54, in addition to the through holes 38. For each side wall 26, the cover plate 40 sealingly closes the side wall openings 54, but not the through holes 38. The side wall openings 54 are thus arranged inside the frame 36.

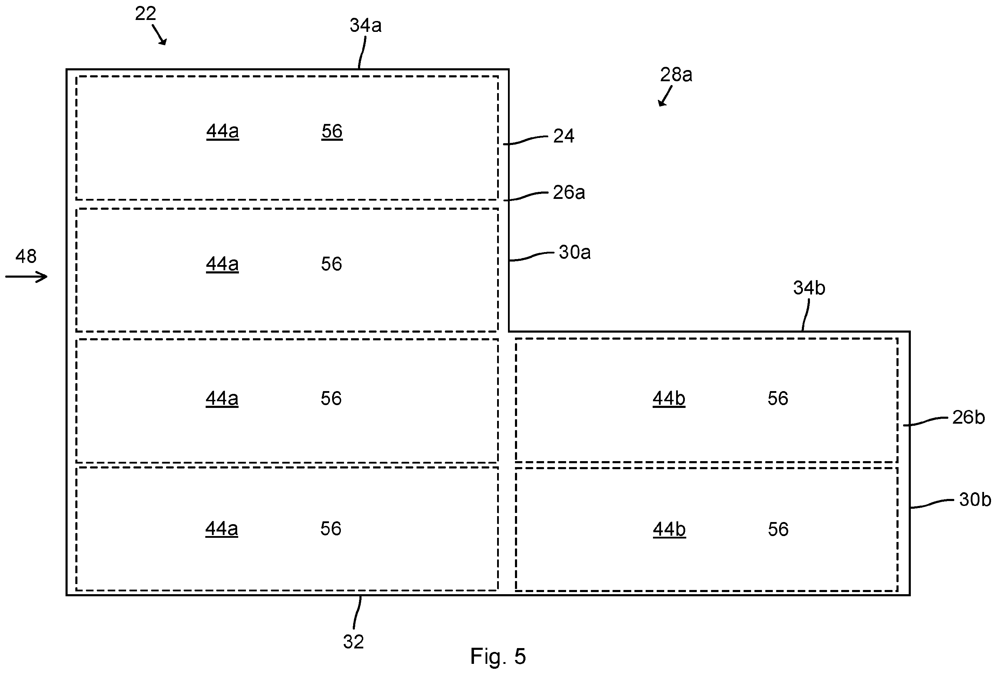

FIG. 5 schematically represents a side view of the battery pack 22 according to one example. As shown, the battery pack 22 of this example also comprises a plurality of (here two) second battery modules 44b arranged in a second stack. The second battery modules 44b are in this example positioned between the second right side wall 26b and the second left side wall 26d, between the rear top wall 34b and the bottom 32, and between the first rear wall 30a and the second rear wall 30b. The second battery modules 44b may be inserted into the housing 24 in the insertion direction 48 through the housing opening 46. Alternatively, the second battery modules 44b may be inserted into the housing 24 through an opening closed by the second rear wall 30b, after removal of the second rear wall 30b. One, several or all of the first battery modules 44a and the second battery modules 44b may also be referred to with reference numeral "44". Each battery module 44 may be of the same size and configuration.

Each battery module 44 comprises a plurality of battery cells (not shown). The battery cells may be nickel foam foil (NFF) batteries or cube batteries. As can be gathered from FIGS. 4 and 5, four unique through holes 38 are associated with each battery module 44 in this example.

FIG. 5 further shows that each battery module 44 comprises a module side 56 parallel with an adjacent side wall 26. As can be gathered from FIGS. 4 and 5, a cover plate area of the cover plate 40 is larger than a module side area of the module side 56.

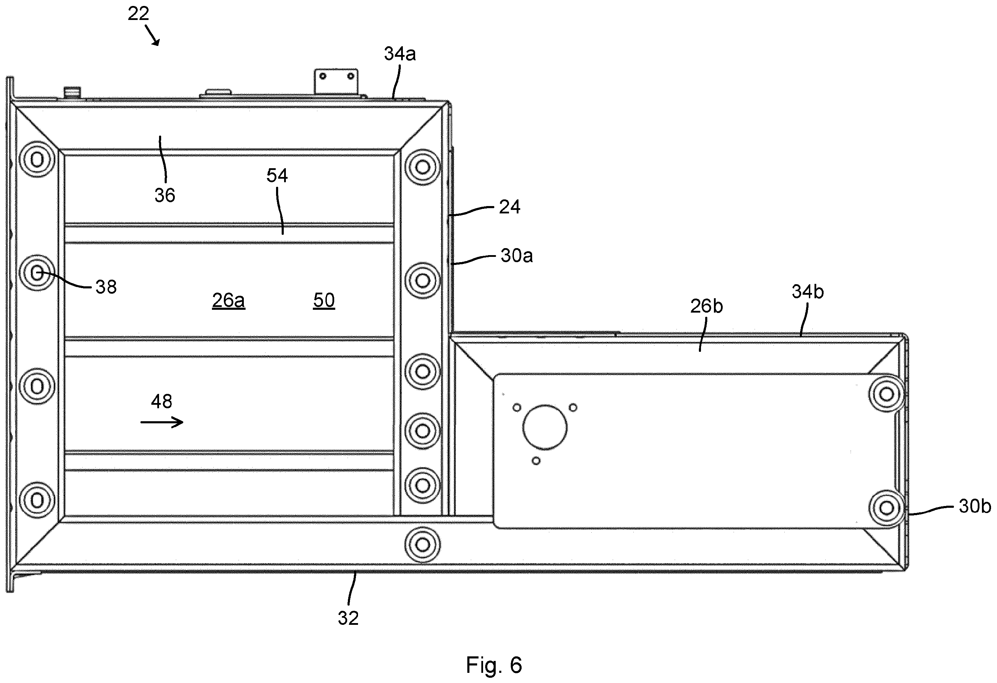

FIG. 6 schematically represents a side view of the battery pack 22 according to one example. In FIG. 6, the first right side wall 26a without the associated cover plate 40 can be seen. As shown, the first right side wall 26a alone is not capable of sealingly closing to the interior of the housing 24 due to the side wall openings 54 and the through holes 38.

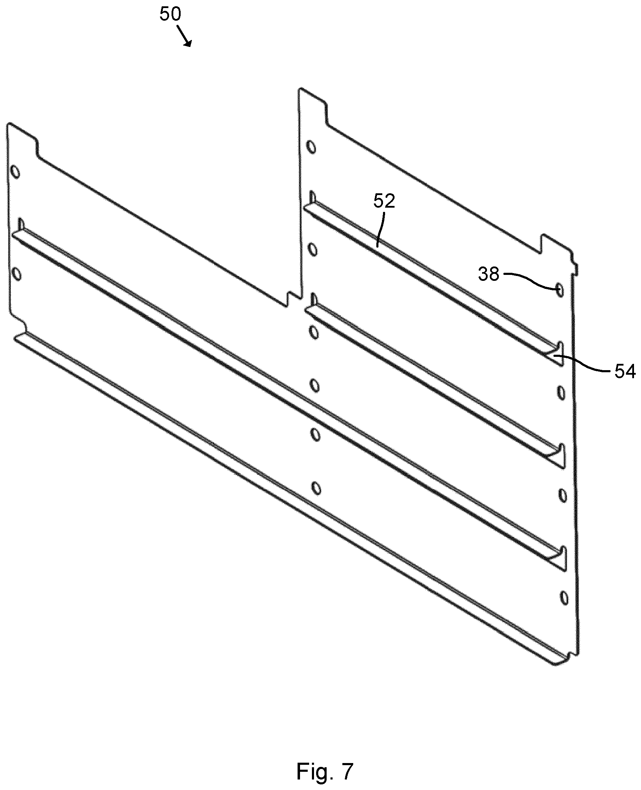

FIG. 7 schematically represents a perspective view of the metal sheet 50 according to one example. As can be gathered from FIG. 7, the metal sheet 50 spans across the module sides 56 of all battery modules 44. An area formed by the metal sheet 50 is larger than a sum of all (here six) module side areas.

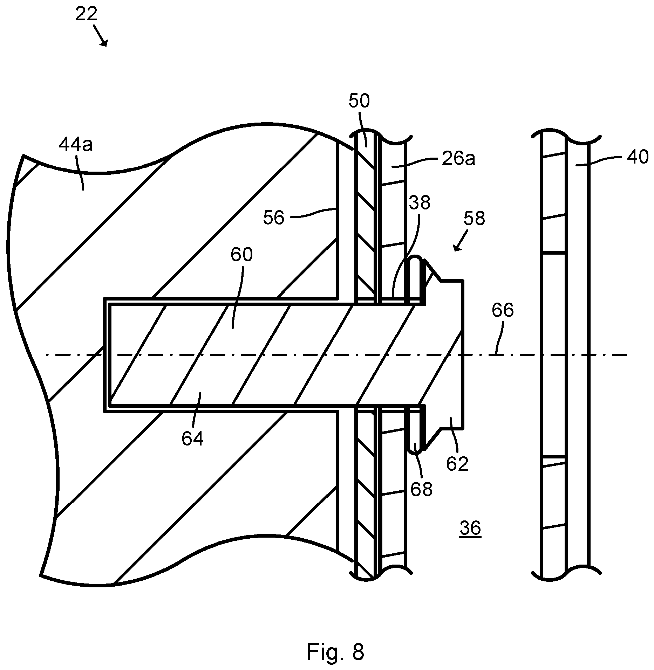

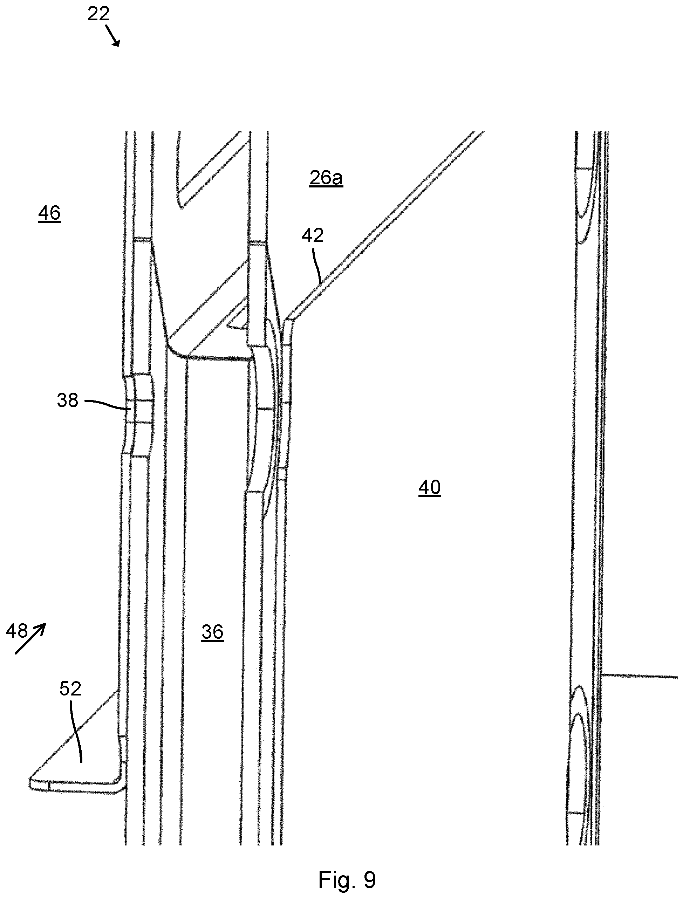

FIG. 8 schematically represents a cross-sectional partial view of the battery pack 22 according to one example, and FIG. 9 schematically represents a cross-sectional perspective and partial view of the battery pack 22 in FIG. 8. With collective reference to FIGS. 8 and 9, the battery pack 22 further comprises a plurality of fastener devices 58, one associated with each through hole 38. Each fastener device 58 secures one of the battery modules 44 to the side wall 26 and sealingly closes the associated through hole 38. Any description given for a single fastener device 58 may apply equally to all fastener devices 58.

In this example, each fastener device 58 comprises a bolt 60. The bolt 60 passes through the associated through hole 38. The bolt 60 comprises a head 62 and a thread 64. The thread 64 here threadingly engages the associated battery module 44. The bolt 60 defines a longitudinal axis 66. Each bolt 60 is here oriented transverse to the side wall 26 and transverse to the insertion direction 48. As shown in FIG. 8, the fastener device 58 of this example is positioned behind the cover plate 40. That is, the fastener device 58 is positioned to the left of the cover plate 40 in FIG. 8. In this example, the head 62 is positioned in the tube of formed by the frame 36.

Each fastener device 58 of this example further comprises a seal washer 68. The seal washer 68 may for example be made of rubber. The seal washer 68 encloses the bolt 60 and is compressed between the head 62 and the side wall 26. In this way, the fastener device 58 sealingly closes the through hole 38. Since the fastener devices 58 sealingly close the through holes 38 and since the cover plate 40 is welded to the side wall 26, the battery pack 22 is protected from water intrusion through the side wall 26 to the battery modules 44. The seal washer 68 may be capable of transferring loads between the bolt 60 and the side wall 26.

As can be gathered from for example FIG. 2, the through holes 38, and consequently also the fastener devices 58 engaging the through holes 38, are positioned outside the cover plate 40. In this example, each pair of a through hole 38 and an associated fastener device 58 is offset from the cover plate 40 in a direction transverse to the longitudinal axis 66 and in a direction parallel with a main extension plane of the cover plate 40. Each through hole 38 may also be positioned outside the cover plate 40 as seen from a single direction externally of the battery pack 22. Furthermore, the cover plate 40 may be entirely positioned on an imaginary straight line between the longitudinal axes 66 of two bolts 60 associated with the cover plate 40.

By removing the front plate 28 and loosening the bolts 60 associated with one of the battery modules 44, the battery module 44 can be removed from the housing 24, e.g., for replacing the battery module 44. A new battery module 44 may then be inserted through the housing opening 46 into the housing 24, e.g., by sliding on the wings 52. The new battery module 44 may then be secured to the housing 24 by tightening the bolts 60 associated with the new battery module 44. This tightening will cause the side wall 26 to be made watertight again. The front plate 28 may then again close the housing opening 46. In case the housing 24 is not fully occupied with battery modules 44 such that there is a vacant position inside the housing 24, the bolts 60 associated with this vacant position may still sealingly close the through holes 38 such that the side wall 26 is sealingly closed.

Although the battery pack 22 has mainly been described with respect to the first right side wall 26a, it should be understood that through holes 38, fastener devices 58 and a cover plate 40 may also be provided in association with one, several or all of the second right side wall 26b, first left side wall 26c and the second left side wall 26d in the corresponding way as provided in association with the first right side wall 26a.

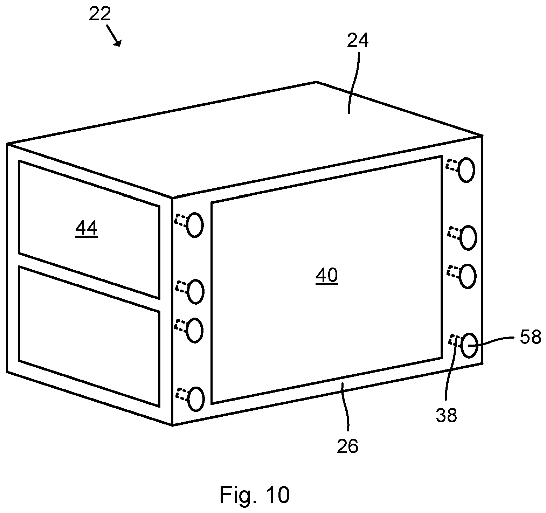

FIG. 10 schematically represents a perspective side view of the battery pack 22 according to one example. The battery pack 22 comprises a housing 24 including a side wall 26. The side wall 26 comprises a plurality of through holes 38. The battery pack 22 further comprises a plurality of battery modules 44 accommodated inside the housing 24. The battery pack 22 further comprises a plurality of fastener devices 58 securing the battery modules 44 to the side wall 26. Each fastener device 58 passes through a respective through hole 38 and sealingly closes the through hole 38. The battery pack 22 further comprises a cover plate 40 sealingly connected to the side wall 26. The fastener devices 58 are positioned outside the cover plate 40.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A battery pack (22) comprising:
- a housing (24) including a side wall (26), the side wall (26) comprising a plurality of through holes (38);
- a plurality of battery modules (44) accommodated inside the housing (24);
- a plurality of fastener devices (58) securing the battery modules (44) to the side wall (26), each fastener device (58) passing through a respective through hole (38) and sealingly closing the through hole (38); and
- a cover plate (40) sealingly joined to the side wall (26);
wherein the fastener devices (58) are positioned outside the cover plate (40).

2. The battery pack (22) according to claim 1, wherein the cover plate (40) is joined to the side wall (26) by welding, brazing or soldering.

3. The battery pack (22) according to any of the preceding claims, wherein each battery module (44) has a module side (56) parallel with the side wall (26), and wherein a cover plate area of the cover plate (40) is larger than a module side area of the module side (56).

4. The battery pack (22) according to any of the preceding claims, wherein the cover plate (40) is parallel with the side wall (26).

5. The battery pack (22) according to any of the preceding claims, wherein the housing (24) comprises a housing opening (46) through which the battery modules (44) can be inserted into the housing (24) in an insertion direction (48), and wherein the side wall (26) is parallel with the insertion direction (48).

6. The battery pack (22) according to any of the preceding claims, wherein each fastener device (58) comprises a bolt (60) and a seal washer (68) enclosing the bolt (60).

7. The battery pack (22) according to any of the preceding claims, wherein the side wall (26) comprises a metal sheet (50) spanning across the battery modules (44).

8. The battery pack (22) according to claim 7, wherein the metal sheet (50) comprises a plurality of wings (52), each wing (52) being arranged to slidingly support a respective battery module (44).

9. The battery pack (22) according to any of the preceding claims, wherein the side wall (26) comprises a frame (36) enclosing the cover plate (40).

10. The battery pack (22) according to claim 9, wherein the through holes (38) are provided in the frame (36).

11. The battery pack (22) according to claim 9 or 10, wherein the frame (36) forms a tube that is closed except for the through holes (38).

12. A battery pack system (20) comprising a plurality of battery packs (22) according to any of the preceding claims.

13. An electrified heavy-duty vehicle (10) comprising a battery pack (22) according to any of claims 1 to 11 or a battery pack system (20) according to claim 12.

## Patentansprüche

1. Batteriepack (22) umfassend:
- ein Gehäuse (24) einschließlich einer Seitenwand (26), wobei die Seitenwand (26) mehrere Durchgangslöcher (38) umfasst;
- mehrere Batteriemodule (44), die im Inneren des Gehäuses (24) untergebracht sind;
- mehrere Befestigungsvorrichtungen (58), die die Batteriemodule (44) an der Seitenwand (26) befestigen, wobei jede Befestigungsvorrichtung (58) durch ein entsprechendes Durchgangsloch (38) führt und das Durchgangsloch (38) abdichtend verschließt; und
- eine Abdeckplatte (40), die abdichtend mit der Seitenwand (26) verbunden ist;
wobei die Befestigungsvorrichtungen (58) außerhalb der Abdeckplatte (40) angeordnet sind.

2. Batteriepack (22) nach Anspruch 1, wobei die Abdeckplatte (40) durch Schweißen, Hartlöten oder Löten mit der Seitenwand (26) verbunden ist.

3. Batteriepack (22) nach einem der vorhergehenden Ansprüche, wobei jedes Batteriemodul (44) eine zur Seitenwand (26) parallele Modulseite (56) aufweist, und wobei eine Abdeckplattenfläche der Abdeckplatte (40) größer ist als eine Modulseitenfläche der Modulseite (56).

4. Batteriepack (22) nach einem der vorhergehenden Ansprüche, wobei die Abdeckplatte (40) parallel zur Seitenwand (26) verläuft.

5. Batteriepack (22) nach einem der vorhergehenden Ansprüche, wobei das Gehäuse (24) eine Gehäuseöffnung (46) umfasst, durch die die Batteriemodule (44) in einer Einschubrichtung (48) in das Gehäuse (24) eingeschoben werden können, und wobei die Seitenwand (26) parallel zur Einschubrichtung (48) verläuft.

6. Batteriepack (22) nach einem der vorhergehenden Ansprüche, wobei jede Befestigungsvorrichtung (58) einen Bolzen (60) und eine den Bolzen (60) umschließende Dichtungsscheibe (68) umfasst.

7. Batteriepack (22) nach einem der vorhergehenden Ansprüche, wobei die Seitenwand (26) ein Metallblech (50) umfasst, das sich über die Batteriemodule (44) erstreckt.

8. Batteriepack (22) nach Anspruch 7, wobei das Metallblech (50) mehrere Flügel (52) umfasst, wobei jeder Flügel (52) so angeordnet ist, dass er ein entsprechendes Batteriemodul (44) gleitend trägt.

9. Batteriepack (22) nach einem der vorhergehenden Ansprüche, wobei die Seitenwand (26) einen Rahmen (36) umfasst, der die Abdeckplatte (40) umschließt.

10. Batteriepack (22) nach Anspruch 9, wobei die Durchgangslöcher (38) in dem Rahmen (36) vorgesehen sind.

11. Batteriepack (22) nach Anspruch 9 oder 10, wobei der Rahmen (36) ein Rohr bildet, das bis auf die Durchgangslöcher (38) geschlossen ist.

12. Batteriepacksystem (20) umfassend mehrere Batteriepacks (22) nach einem der vorhergehenden Ansprüche.

13. Elektrifiziertes Schwerlastfahrzeug (10) umfassend ein Batteriepack (22) nach einem der Ansprüche 1 bis 11 oder ein Batteriepacksystem (20) nach Anspruch 12.

## Revendications

1. Bloc-batterie (22) comprenant :
- un boîtier (24) incluant une paroi latérale (26), la paroi latérale (26) comprenant une pluralité de trous traversants (38) ;
- une pluralité de modules de batterie (44) reçus à l'intérieur du boîtier (24) ;
- une pluralité de dispositifs de fixation (58) fixant les modules de batterie (44) à la paroi latérale (26), chaque dispositif de fixation (58) passant à travers un trou traversant (38) respectif et fermant de façon étanche le trou traversant (38) ; et
- une plaque de couverture (40) reliée de façon étanche à la paroi latérale (26) ;
dans lequel les dispositifs de fixation (58) sont positionnés à l'extérieur de la plaque de couverture (40).

2. Bloc-batterie (22) selon la revendication 1, dans lequel la plaque de couverture (40) est reliée à la paroi latérale (26) par soudage ou brasage.

3. Bloc-batterie (22) selon l'une quelconque des revendications précédentes, dans lequel chaque module de batterie (44) comporte un côté de module (56) parallèle à la paroi latérale (26), et dans lequel une zone de plaque de couverture de la plaque de couverture (40) est plus grande qu'une zone de côté de module du côté de module (56).

4. Bloc-batterie (22) selon l'une quelconque des revendications précédentes, dans lequel la plaque de couverture (40) est parallèle à la paroi latérale (26).

5. Bloc-batterie (22) selon l'une quelconque des revendications précédentes, dans lequel le boîtier (24) comprend une ouverture de boîtier (46) à travers laquelle les modules de batterie (44) peuvent être insérés dans le boîtier (24) dans une direction d'insertion (48), et dans lequel la paroi latérale (26) est parallèle à la direction d'insertion (48).

6. Bloc-batterie (22) selon l'une quelconque des revendications précédentes, dans lequel chaque dispositif de fixation (58) comprend un boulon (60) et une rondelle d'étanchéité (68) entourant le boulon (60).

7. Bloc-batterie (22) selon l'une quelconque des revendications précédentes, dans lequel la paroi latérale (26) comprend une feuille métallique (50) s'étendant à travers les modules de batterie (44).

8. Bloc-batterie (22) selon la revendication 7, dans lequel la feuille métallique (50) comprend une pluralité d'ailes (52), chaque aile (52) étant conçue pour supporter de façon coulissante un module de batterie (44) respectif.

9. Bloc-batterie (22) selon l'une quelconque des revendications précédentes, dans lequel la paroi latérale (26) comprend un cadre (36) entourant la plaque de couverture (40).

10. Bloc-batterie (22) selon la revendication 9, dans lequel les trous traversants (38) sont disposés dans le cadre (36).

11. Bloc-batterie (22) selon la revendication 9 ou 10, dans lequel le cadre (36) forme un tube, lequel est fermé à l'exception des trous traversants (38).

12. Système de blocs-batterie (20) comprenant une pluralité de blocs-batterie (22) selon l'une quelconque des revendications précédentes.

13. Véhicule utilitaire électrique (10) comprenant un bloc-batterie (22) selon l'une quelconque des revendications 1 à 11 ou un système de blocs-batterie (20) selon la revendication 12.
